Europäisches Patentamt

European Patent Office

Office européen des brevets

(19)

(11) Numéro de publication: **0 274 943**
**B1**

## (12) FASCICULE DE BREVET EUROPEEN

(45) Date de publication du fascicule du brevet:
**28.11.90**

(51) Int. Cl.⁵: **G01P 21/00**

(21) Numéro de dépôt: **87402828.5**

(22) Date de dépôt: **11.12.87**

(54) Dispositif d'étalonnage d'accéléromètres ultrasensibles.

(30) Priorité: **18.12.86 FR 8617718**

(43) Date de publication de la demande:
**20.07.88 Bulletin 88/29**

(45) Mention de la délivrance du brevet:
**28.11.90 Bulletin 90/48**

(84) Etats contractants désignés:
**DE FR GB IT**

(56) Documents cités:
**FR-A- 2 124 055**
**US-A- 4 188 816**
**US-A- 4 495 433**

(73) Titulaire: **OFFICE NATIONAL D'ETUDES ET DE RECHERCHES AEROSPATIALES(O.N.E.R.A.),**
**29, avenue de la Division Leclerc, F-92322 Châtillon Cédex(FR)**

(72) Inventeur: **Bernard, Alain, 2, Allée des Renardeaux, F-94260 Fresnes(FR)**
Inventeur: **Touboul, Pierre, 19, Clos des Bleuets, F-78280 Guyancourt(FR)**

(74) Mandataire: **Martinet & Lapoux, 62, rue des Mathurins, F-75008 Paris(FR)**

## Description

La présente invention concerne un dispositif destiné à la caractérisation de la sensibilité aux accélérations d'instruments de mesure tels que les accéléromètres, les gyromètres ou les gravimètres. Elle concerne plus particulièrement l'étalonnage de tels instruments lorsqu'ils sont montés regidement sur la structure d'un véhicule spatial ou disposés sur une plateforme découplée de la structure ou encore lorsqu'ils sont disposés sur une plateforme découplée d'un bâti support terrestre.

On connaît, par la publication ONERA nº 1976-5 "LES ESSAIS EN ORBITE DE L'ACCELEROME-TRE CACTUS", DELATTRE et al. et par l'article "The CACTUS ACCELEROMETER" paru dans l'AGARDograph Nº 254, "Advance in Inertial Navigation Systems and Components", Avril 1981, pages 5-1 à 5-10, les moyens utilisés à bord du satellite français CASTOR-D5B pour caractériser l'accéléromètre électrostatique capacitif triaxial ultrasensible "CACTUS".

Dans ces documents, l'accéléromètre est placé au centre de masse du satellite. Des mécanismes déplacent des masselottes et permettent de décentrer le satellite de quantités connues. Des volants d'inertie commandent la mise en rotation à vitesse constante du satellite pour créer une accélération centripète perçue, dans le système d'axes de l'accéléromètre, comme une accélération constante en module et en direction.

Un premier invonvénient de cette technique est d'imposer une rotation lente au satellite, ce qui n'est pas possible lorsque le satellite doit être stabilisé en attitude et/ou comporte des instruments pointés dans une direction de l'espace.

Un deuxième inconvénient du procédé connu est que l'accélération d'étalonnage est difficilement discernable des accélérations communiquées au satellite par les forces extrérieures telles que la traînée aérodynamique, la pression de radiation, etc... En conséquence, la précision de la caractérisation de la sensibilité de l'accéléromètre est limitée, typiquement à une précision relative de $10^{-2}$, et les moyens décrits ne sont pas applicables lorsqu'une plus grande précision est recherchée.

L'invention remédie aux inconvénients de l'état de la technique rappelée ci-dessus. Elle a pour but d'appliquer au support des instruments de mesure, selon des axes définis, des accélérations périodiques, à valeur moyenne nulle, d'amplitude, de fréquence et de phase connues facilement identifiables à partir des signaux électriques délivrés par les instruments à caractériser en réponse aux accélérations qui leur sont appliquées.

A cette fin, un dispositif d'étalonnage conforme à l'invention est tel que défini dans la revendication 1.

En pratique, les accélérations périodiques sont sinusoïdales et sont appliquées selon trois axes de référence formant un trièdre, en translation et en rotation, et les réponses des instruments sont identifiées par démodulation synchrone des signaux électriques.

Plus précisément, l'invention vise à fournir un dispositif d'étalonnage d'instruments de mesure sensibles aux accélérations, comprenant des moyens d'engendrer des accélérations de translation et de rotation selon trois axes trirectangles et permettant de déterminer à partir des signaux électriques des instruments, leur sensibilité, leur orientation et leur position par rapport aux axes de référence. L'invention a aussi pour but d'identifier les principales imperfections de réalisation et leur position par rapport aux axes de référence. L'invention a aussi pour but d'identifier les principales imperfections de réalisation des moyens de génération des accélérations et de déterminer le centrage du véhicule spatial ou de la plateforme par rapport aux axes de référence ainsi que les rapports des moments principaux d'inertie.

Dans un premier mode de réalisation, les actionneurs sont à mouvement rotatif et à balourd dynamique et sont disposés symétriquement de part et d'autre du point de concours des trois axes de référence.

D'autres caractéristiques de ce premier mode de réalisation sont formulées dans les revendications dépendantes 3 et 4.

Dans un second mode de réalisation, les actionneurs sont à mouvement linéaire et sont disposés d'un même côté du point de concours des trois axes de référence.

D'autres caractéristiques de ce second mode de réalisation sont formulées dans les revendications dépendantes 6 à 10.

L'invention concerne également des procédés d'étalonnage d'instruments sensibles aux accélérations, tels que définis dans les revendications 11 à 13.

D'autres avantages de l'invention apparaîtront plus clairement à la lecture de la description suivante de plusieurs réalisations préférées de l'invention en référence aux dessins annexés correspondants dans lesquels :

- la Fig. 1 représente schématiquement un dispositif d'étalonnage tridimensionnel conforme à l'invention et comprenant trois paires d'actionneurs à balourd dynamique ;
- la Fig. 2 représente en détail un actionneur à mouvement rotatif et à balourd dynamique inclus dans le dispositif d'étalonnage de la Fig. 1 ;
- la Fig. 3 est un bloc-diagramme d'une chaîne électronique d'asservissement en vitesse et en phase d'une paire d'actionneurs alignés sur un axe commun de système d'axes trirectangles ;
- la Fig. 4 montre schématiquement un diagramme relatif à une application de l'invention à l'étalonnage d'un ensemble d'accéléromètres pour une identification complète de leurs caractéristiques ;
- la Fig. 5 représente schématiquement un autre mode de réalisation du dispositif d'étalonnage tridimensionnel conforme à l'invention et comprenant trois paires d'actionneurs électrodynamiques et trois paires de détecteurs de position ;
- la Fig. 6 est un bloc-diagramme d'une chaîne d'asservissement relatif à un plan de la position du support des instruments à étalonner pour le dispositif de la Fig. 5 ;

- la Fig. 7 est une vue de dessus schématique d'un dispositif d'étalonnage analogue à celui des Figs. 5 et 6 pour être monté à bord d'un satellite à traînée compensée ;
- la Fig. 8 est un bloc-diagramme d'un détecteur de traînée compensée appliquée à l'invention ; et
- la Fig. 9 est un bloc-diagramme de la chaîne d'asservissement de la position du support des instruments à étalonner dans le cas d'un satellite comportant un détecteur de compensation de traînée.

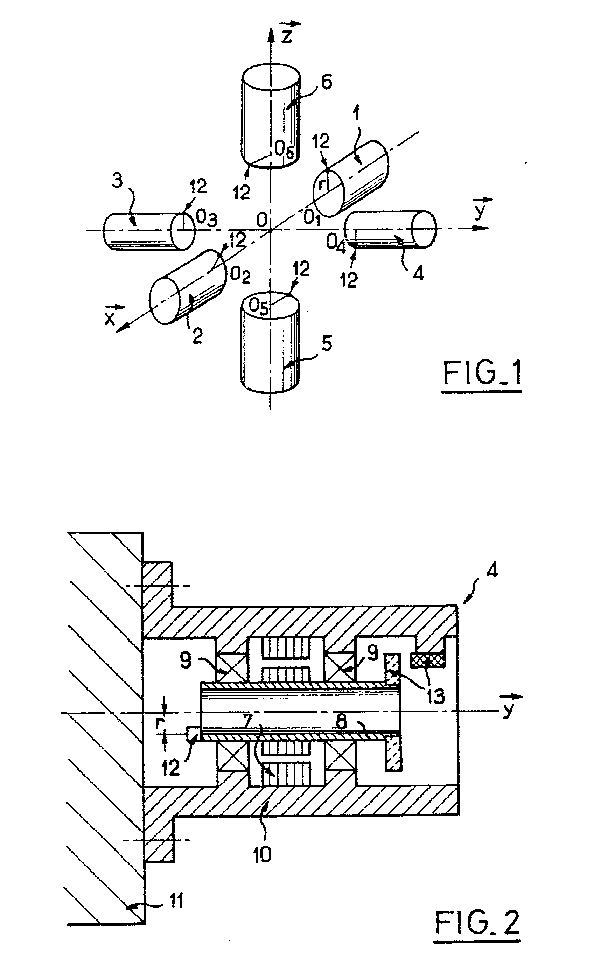

En se référant aux Figs. 1 et 2, les couples de repère 1-2, 3-4, 5-6 désignent trois paires d'actionneurs rotatifs d'un dispositif d'étalonnage ayant chacun un moteur électrique 7. Les axes de rotation des deux actionneurs de chaque paire 1-2, 3-4, 5-6 sont coaxiaux à un axe commun respectif

$$\vec{x}, \ \vec{y}, \ ou \ \vec{z}$$

du système d'axes trirectangles de référence. Les moteurs de chaque paire sont disposés symétriquement de part et d'autre du point 0 de concours des trois axes. Chacun des moteurs électriques 7, comprend un rotor 8 qui est équilibré dynamiquement, ainsi qu'un stator 10 dans lequel est monté à rotation axiale le rotor 8 par l'intermédiaire de roulements à billes 9. Le stator 10 est muni d'une embase de fixation 11. L'une des extrémités de l'axe du rotor, face à l'embase, supporte une masselotte 12 de masse $\underline{m}$ excentrée par rapport à l'axe de rotation respectif

$$\vec{x}, \ \vec{y}, \ \vec{z}$$

du rotor, d'une longueur $\underline{r}$. L'autre extrémité du rotor 8 supporte la partie mobile d'un détecteur angulaire ou de phase 13.

En fonctionnement, la masselotte 12 est entraînée en rotation à vitesse uniforme par les moteur 7 est sa position est indiquée par le détecteur de phase 13. Le mouvement de la masselotte 12 engendre sur le véhicule spatial tel que satellite, ou la plateforme supportant les instruments à étalonner, une accélération en translation dont l'amplitude est constante et dont la direction tourne à vitesse uniforme dans un plan perpendiculaire à l'axe de rotation du moteur.

Si le plan de rotation de la masselotte 12 ne contient pas le centre de masse du véhicule spatial, ou de la plateforme supportant les instruments, le mouvement uniforme de la masselotte engendre également une accélération angulaire, dont l'amplitude est constante et dont la direction tourne uniformément dans un jplan perpendiculaire à l'axe de rotation.

On constate alors qu'il est possible, avec un ensemble de trois paires d'actionneurs de ce type associées à trois axes trirectangles, de commander la rotation des actionneurs pour engendrer selon ces axes des accélérations sinusoïdales de translation et des accélérations sinusoïdales angulaires dont les pulsations sont alors égales aux vitesses angulaires de rotation des balourds.

A titre d'exemple, un seul actionneur ayant un balourd de masse $\underline{m}$ = 10 g, tournant à une distance $\underline{r}$ de 1 cm de son axe de rotation, à une vitesse angulaire de 1 rad/s applique sur un satellite de masse M = $10^3$ kg. une accélération sinusoïdale d'amplitude maximal $10^{-7}$ m/s$^2$ et de pulsation 1 rad/s. Si le plan de rotation de la masse $\underline{m}$ est à une distance de 1 m du centre de masse du satellite dont les inerties principales sont de $10^3$ kg.m$^2$, l'amplitude de l'accélération angulaire engendrée est de $10^{-7}$ rad/s$^2$.

Lorsque les balourds de deux actionneurs coaxiaux à un même axe, tels que les actionneurs 1 et 2 relatifs à l'axe

$$\vec{x}$$

par exemple, tournent à la même vitesse angulaire, dans le même sens avec la même phase, dans des plans symétriques par rapport au centre de masse du satellite, la résultante des deux mouvements n'engendre sur le satellite qu'une accélération de translation parallèle à l'axe

$$\vec{z},$$

sans engendrer d'accélération angulaire. Dans les mêmes conditions, si les balourds sont en opposition de phase ils engendrent sur le satellite une accélération angulaire sans engendrer d'accélération de translation. Lorsque les balourds tournent à la même vitesse, dans des sens opposés, la résultante du mouvement engendre sur le satellite une accélération de translation et une accélération angulaire.

Lorsque l'invention est embarquée à bord d'un satellite, le système de contrôle d'attitude de celui-ci permettra l'annulation des vitesses angulaires qui résulteraient de variations de moment cinétique créées lors des mises en fonctionnement ou des changements de mode de fonctionnement des actionneurs.

La démodulation synchrone des signaux électriques délivrés par des instruments de mesure permet de déterminer la sensibilité des instruments aux accélérations de translation et aux accélérations angulaires, ces dernières dépendant de la position des instruments. En conséquence, l'homme du métier pourra déterminer également la position des instruments à étalonner à bord du satellite ou sur la plateforme les supportant.

En outre, l'homme du métier pourra, par l'exploitation des informations fournies par les démodulations synchrones, déterminer des imperfections de réalisation des mécanismes eux-mêmes.

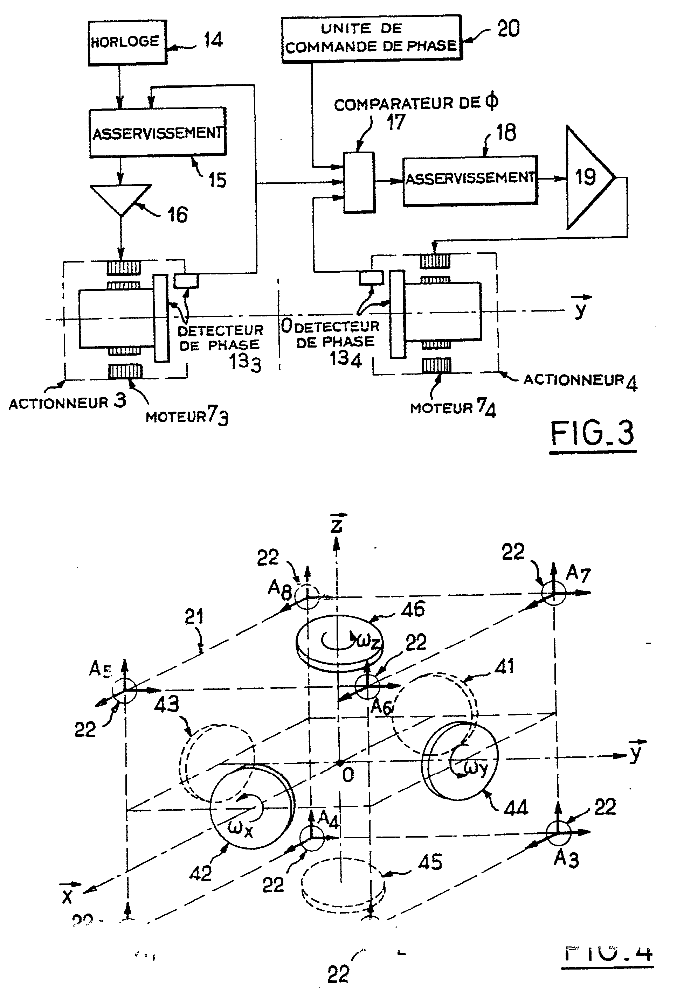

Conformément à la Fig. 3, deux actionneurs coaxiaux, tels que les deux actionneurs 3 et 4 associés à l'axe commun

$$\vec{y},$$

possèdent chacun un moteur $7_3$, $7_4$ asservi en vitesse et en phase par une chaîne d'asservissement en vitesse et en phase. Dans cette chaîne, des signaux, issus du détecteur de phase $13_3$ et d'une horloge 14 permettent de commander le moteur $7_3$ au travers d'une unité électronique d'asservissement 15 et d'un amplificateur 16. Le moteur $7_3$ est ainsi asservi pour que l'actionneur 3 tourne à vitesse constante, la phase de l'actionneur 3 étant repérée par rapport au signal d'horloge.

Le moteur $7_4$ est asservi pour que le mouvement de l'actionneur 4 recopie celui de l'actionneur 3.

Pour cela, un comparateur de phase 17 analyse des signaux fournis par les détecteurs $13_3$ et $13_4$ des actionneurs 3 et 4. Une seconde unité électronique d'asservissement 18 élabore un signal, amplifié par un amplificateur 19, pour que la différence de phase, entre le mouvement des deux actionneurs, soit constante. Une unité de commande électronique 20 permet d'imposer, à travers le comparateur de phase 17, la valeur de cette différence.

L'invention tire parti d'une caractéristique propre aux actionneurs tournants de l'invention qui est d'engendrer, suivant deux axes orthogonaux, des accélérations sinusoïdales d'amplitudes maximales identiques et à la même fréquence. Ainsi, il devient possible de comparer avec une très grande précision la sensibilité d'un instrument selon deux axes orthogonaux puisque les accélérations d'étalonnage ont la même source d'accélération.

Dans un dispositif d'étalonnage comprenant trois paires d'actionneurs conformément à la Fig. 1, lorsque le centre de symétrie 0 du dispositif est confondu avec le centre de masse du satellite, on peut alors, à l'aide de trois paires d'actionneurs tournant à des vitesses différentes, appliquer au support des instruments, des accélérations sinusoïdales de translation à trois pulsations différentes suivant les trois axes de rotation et disposer, ainsi, pour chaque axe, de signaux électriques des instruments correspondant à deux accélérations de translation à deux fréquences différentes.

Ceci est réalisé lorsque les balourds tournent deux à deux à la même vitesse de rotation avec la même phase.

Si le dispositif d'étalonnage est embarqué à bord d'un satellite, on choisira des vitesses permettant d'appliquer au support des instruments des accélérations à des fréquences suffisamment éloignées de celle du système de pilotage du satellite pour éviter des interférences.

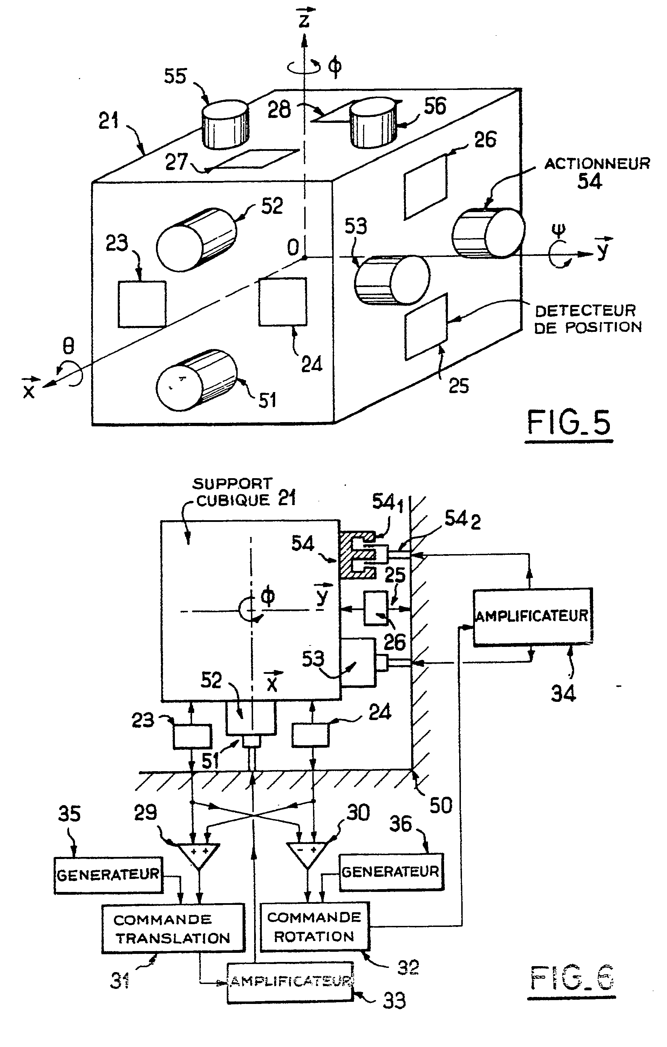

La Fig. 4 représente une application de l'invention à l'étalonnage de huit accéléromètres triaxiaux $A_1$ à $A_8$ embarqués à bord d'un satellite. Le dispositif d'étalonnage comprend un support cubique 21 solidaire de la structure du satellite, et trois paires d'actionneurs rotatifs 41-42, 43-44, 45-46 conformes à la Fig. 2 qui sont disposées respectivement selon les axes trirectangles

$$\vec{x}, \ \vec{y}, \ \vec{z}$$

passant par les centres des faces du support cubique.

Les instruments à étalonner sont des accéléromètres capacitifs triaxiaux ultrasensibles 22 disposés aux sommets du support cubique 21.

Les paires d'actionneurs 41-42, 43-44, 45-46 sont commandées par trois chaînes électroniques d'asservissement respectives conformes à la Fig.

3 pour obtenir des vitesses angulaires respectives $\omega_x$, $\omega_y$, et $\omega_z$, déterminées de façon à pouvoir effectuer des démodulations synchrones des signaux délivrés par les accéléromètres, aux pulsations $\omega_x$, $\omega_y$, et $\omega_z$.

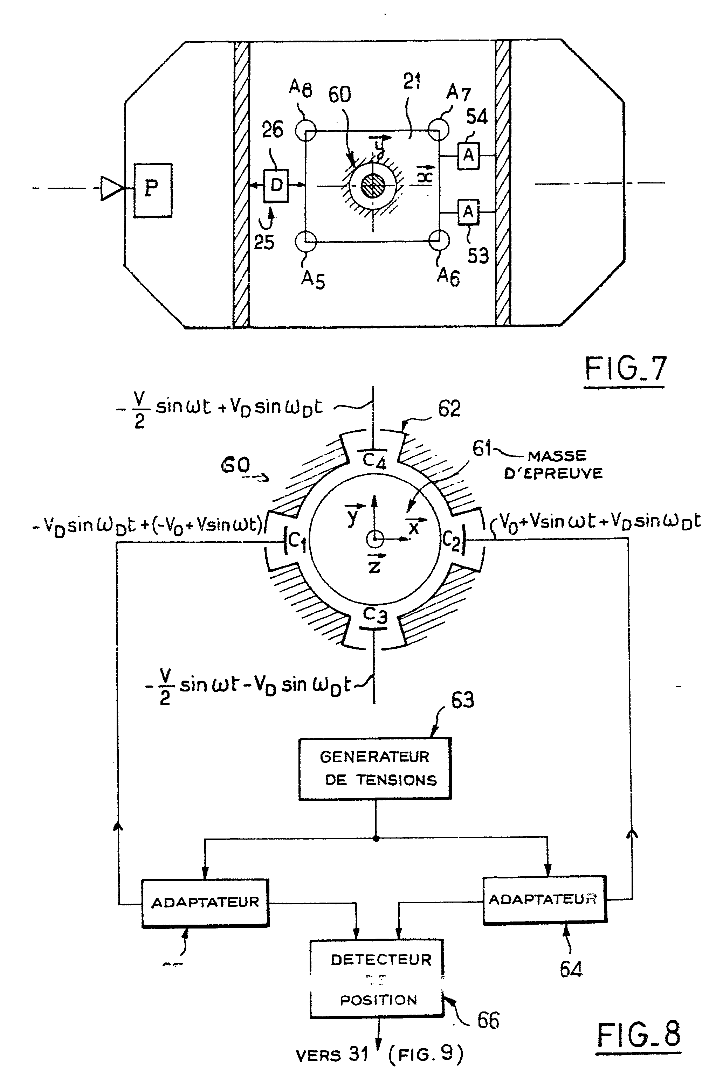

Dans un autre mode de réalisation de l'invention conforme aux Figs. 5 et 6, le support cubique 21 des instruments à étalonner comporte trois paires d'actionneurs à mouvement linéaire 51-52, 53-54 et 55-56 solidaires d'un bâti rigide 50. Les actionneurs peuvent être aussi bein, à moteur électrodynamique ou piézoélectrique. La Fig. 6 montre, en vue de dessus du support cubique 21, une version électrodynamique d'actionneurs, tels que l'actionneur 54 dont le circuit magnétique $54_1$ est solidaire du support 21 et le bobinage $54_2$ est solidaire du bâti 50. Les actionneurs sont disposés pour engendrer selon les axes trirectangles $\vec{x}$, $\vec{y}$, $\vec{z}$ des accélérations périodiques de translation et de rotation.

Dans ce but, les trois paires d'actionneurs sont disposées respectivement sur trois faces adjacentes du support cubique 21, symétriquement par rapport à des axes communs respectifs

$$\vec{x}, \ \vec{y}, \ et \ \vec{z}$$

du système d'axes de référence, et agissent dans des plans contenant les faces du trièdre formé par les trois axes trirectangles, respectivement. La Fig. 5 montre trois paires de détecteurs de position 23-24, 25-26 et 27-28 disposées à proximité des paires d'actionneurs 51-52, 53-54 et 55-56 respectivement.

Par exemple, des sorties des détecteurs 23-24 sont reliées à des entrées d'amplificateurs 29 et 30 fonctionnant en sommateur et soustracteur. Les amplificateurs 29 et 30 mesurent respectivement la somme et la différence des signaux délivrés par les détecteurs, qui correspondent à une translation selon l'axe

$$\vec{x}$$

et à une rotation $\phi$ autour de l'axe

$$\vec{z},$$

Des circuits de commande 31 et 32 reliés aux sorties des amplificateurs 29 et 30 commandent en translation les actionneurs 51 et 52 et en rotation les actionneurs 53 et 54 par l'intermédiaire d'amplificateurs 33 et 34 respectivement. Des générateurs de tensions 35 et 36 reliés respectivement à d'autres entrées des circuits de commande de translation et de rotation, 31 et 32, constituent un générateur de signaux de tension périodiques imposant au support 21 des instruments de mesure, des accélérations périodiques d'étalonnage en translation et en rotation.

L'ensemble des trois paires d'actionneurs, des détecteurs de position et de leur chaîne électronique d'asservissement assure le contrôle des six degrés de liberté du support des instruments de mesure par rapport au bâti 50, par exemple la structure d'un satellite, et permet d'engendrer les accélérations d'étalonnage nécessaires à partir de signaux périodiques fournis par des générateurs de tensions 35, 36 agissant sur la boucle d'asservissement.

La disposition qui vient d'être décrite s'applique bien lorsqu'elle est installée à bord d'un satellite, les générateurs de tensions étant alors télécommandés ou encore déclenchés par un ordre faisant partie d'un programme embarqué.

Une variante préférée de l'invention consiste à utiliser des actionneurs à moteur électrodynamique et à mettre à profit la présence à bord d'un satellite du type dit "à traînée compensée" d'un système détecteur de compensation de traînée pour engendrer sur le support des instruments de mesure les accélérations d'étalonnage nécessaires.

On rappelle qu'un satellite à traînée compensée est un satellite en orbite basse, essentiellement inférieure à 300 km, qu'il est soumis aux forces de surface dues à la traînée aérodynamique (freinage par l'atmosphère résiduelle) et qu'il est nécessaire d'assurer son maintien en orbite par des phases de propulsion pilotée pour compenser la traînée.

C'est ainsi qui le satellite comprend und masse d'épreuve par exemple sphérique, animée d'un mouvement orbital et libre de se déplacer par rapport au satellite, et des détecteurs de position de la masse d'épreuve par rapport au satellite. Compte tenu du freinage du satellite évoqué ci-dessus, la masse d'épreuve non soumise aux forces extérieures s'exerçant sur le satellite a tendance à se déplacer dans la direction opposée à la traînee.

Une loi de commande permet de déterminer, en fonction du déplacement relatif observé par les détecteurs de position, les impulsions de vitesse à communiquer au satellite par un système propulsif approprié pour maintenir la masse d'épreuve dans une plage souhaitée. Le satellite est ainsi asservi en position par rapport à la masse d'épreuve, avec une précision correspondant à la plage choisie.

Dans ces conditons, les accéléromètres montés sur leur supportk se trouvent soumis, lors des phases de propulsion, à des accélérations occasionnées par les impulsions de vitesse communiquées au satellite par les système propulsif.

L'invention préconise de disposer au centre 0 du support cubique 21 des instruments un détecteur de compensation de traînée 60. Le support 21 comporte trois paires d'actionneurs électrodynamiques et trois paires de détecteurs de position respectivement pour les trois axes de référence, telles que la paire d'actionneurs 53-54 et la paire de détecteurs de position 25-26 montrées schématiquement à la Fig. 7, relativement à l'axe respectif

$$\vec{y}.$$

Un système à deux étages est ainsi constitué par :
- d'une part, le support des instruments asservi en position à la masse d'épreuve du détecteur de compensation de traînée avec une très grande précision et,

- d'autre part, le satellite asservi en position par rapport au support des instruments avec une précision limitée, ce qui procure l'avantage de soustraire les instruments à étalonner aux accélérations dues aux forces extérieures.

Il suffit, alors, d'appliquer les accélérations d'étalonage à la masse d'épreuve pour quéelles se trouvent appliquées au support sur lequel sont montés les instruments à étalonner, celui-ci étant asservi de façon à recopier les mouvements de la masse d'épreuve.

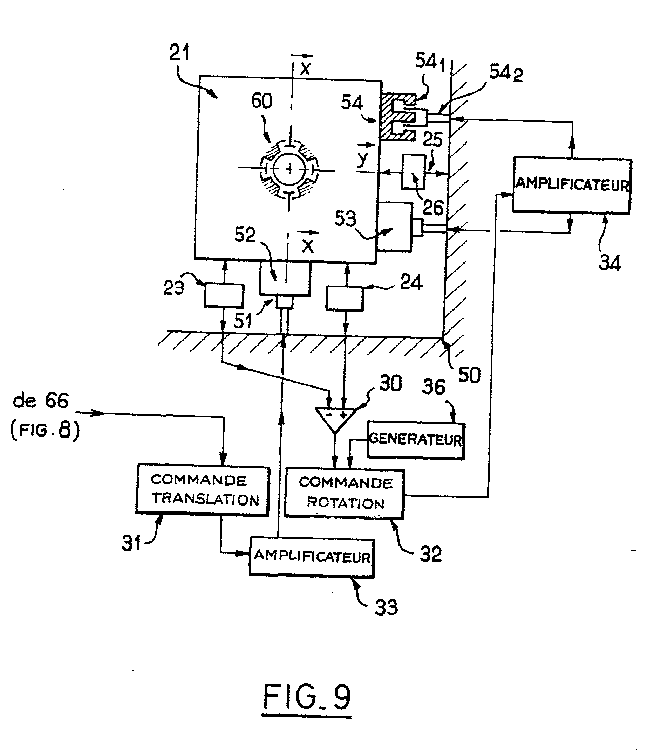

On agit par action électrique sur la masse d'épreuve pour imposer des modifications de son mouvement orbital et on utilise les signaux électriques représentatifs de sa position pour commander directement la boucle d'asservissement des actionneurs électrodynamiques comme il va être exposé dans la suite en référence aux Fig. 8 et 9.

Dans la Fig. 8, 60 désigne un détecteur de compensation de traînée comportant une masse d'épreuve sphérique 61 à l'intérieur d'une cage sphérique 62. La masse d'épreuve est libre et flottante dans la cage. Des électrodes à calotte sphérique $C_1$-$C_2$, $C_3$-$C_4$ et $C_5$-$C_6$ sont isolées de la cage et sont disposées par paires autour des pôles où trois axes trirectangles respectifs

$$\vec{x}, \ \vec{y}, \ et \ \vec{z}$$

ayant pour origine le centre de la cage rencontrent cette dernière.

Les deux électrodes centrés sur un même axe

$$\vec{x}, \ \vec{y}, \ ou \ \vec{z}$$

sont utilisées pour la détection capacitive de la position de la masse 61 et pour la génération des accélérations d'étalonnage.

Dans ce but, les électrodes $C_1$ et $C_2$ de l'axe $\bar{x}$ reçoivent d'un générateur de tensions 63, par l'intermédiaire d'adaptateurs d'impédance et de tension 64 et 65, des tensions de détection en opposition de phase $(-V_D \sin \omega_D t)$ et $V_D \sin \omega_D t)$, respectivement.

Les électrodes $C_1$ et $C_2$ reçoivent également pendant les phases d'étalonnage, par les mêmes voies de liaison, des tensions de génération des accélérations d'étalonnage $(-V_O + V \sin \omega t)$ et $(V_O + V \sin \omega t)$ respectivement. De préférence, la pulsation $\omega_D$ des tensions de détection est élevée, typiquement supérieure à $3 . 10^5$ rad/s, tandis que la pulsation $\omega$ correspondant à la génération des accélérations d'étalonnage est faible et ne perturbe pas le fonctionnement du détecteur capacitif.

Les quatre autres électrodes $C_3$-$C_4$ et $C_5$-$C_6$ associées aux deux autres axes

$$\vec{y} \ et \ \vec{z}$$

normaux à la force à engendrer, selon la direction

$$\vec{x}$$

dans la Fig. 8, sont alimentées par des tensions de détection respectivement opposées $(-V_D \sin \omega_D t)$ et $(V_D \sin \omega_D t)$ et, lors des phases d'étalonnage, par des tensions sinusoïdales $(-(V/2) \sin \omega t)$ d'amplitude moitié et de phases opposées à celles appliquées aux électrodes $C_1$-$C_2$ de l'axe à étalonner, comme indiqué sur la Fig. 8, et fournies par le générateur 63 à partir d'une source commune de référence de fréquence, non représentée.

En dehors de l'application des tensions d'étalonnage, le dispositif fonctionne en détecteur de traînée compensée.

La position relative de la masse d'épreuve 61 par rapport aux électrodes $C_1$-$C_2$ est mesurée par le détecteur de position 66 dont des entrées sont reliées aux adaptateurs 64 et 65 et dont la sortie est reliée au circuit de commande de translation 31 montré à la Fig. 9.

Le dispositif d'étalonnage selon l'invention montré à la Fig. 9 est analogue à celui montré à la Fig. 6 précédemment décrite, à l'exception du fait qu'il comporte maintenant le détecteur de compensation de traînée 60 et que le détecteur de position 66 est relié au circuit de commande de translation 31. Les tensions de sortie du détecteur de position 66 interviennent sur la boucle d'asservissement de translation du support 21 par rapport à la masse d'épreuve. De cette manière, tous les défauts des organes, tels que, par exemple, des défauts des moteurs électrodynamiques dont l'efficacité peut être mal définie, qui limitent la précision d'étalonnage, n'ont plus d'importance à condition que le gain de la boucle soit suffisant.

Dans le montage préconisé, avec un asservissement bien réalisé, la précision d'étalonnage des instruments à étalonner ne dépend plus que de la qualité de la génération des forces électrostatiques engendrées sur la masse d'épreuve 61 du détecteur de compensation de traînée 60, indépendamment des défauts du reste du système.

Comme cela est connu pour le fonctionnement des accéléromètres électrostatiques, il importe que le potentiel de la masse d'épreuve soit maintenu égal à celui de la cage.

Cette condition étant respectée, les forces électrostatiques obtenues à la pulsation $\omega$ sont nulles sur les axes

$$\vec{y} \text{ et } \vec{z}$$

$F_y = F_z \cong (\varepsilon S/(2e^2))[((-V/2) \sin \omega t)^2 - (-V/2) \sin \omega t)^2]$ où $\varepsilon$ désigne la permitivité du vide, S la surface d'une électrode et e la distance entre électrode et masse d'épreuve ; la force engendrée sur l'axe

$$\vec{x}$$

est :
$F_x \cong (\varepsilon S/2e^2))[(V_0 + V \sin \omega t)^2 - (-V_0 + \sin \omega t)^2]$ $F_x \cong (2\varepsilon S V_0/e^2)V \sin \omega t$.

Si le système est parfaitement symétrique, les forces $F_y$ et $F_z$ sont nulles. Dans le cas contraire, les forces $F_y$ et $F_z$ ne présentent pas de composantes à la pulsation $\omega$ et ne perturbent donc pas l'étalonnage.

La force $F_x$ est sinusoïdale, à la pulsation $\omega$. Son amplitude est proportionnelle aux gradients de capacité des électrodes $C_1$ et $C_2$ par rapport à la masse d'épreuve, à la tension de polarisation $V_0$ et à l'amplitude V des tensions sinusoïdales appliquées.

L'accélération communiqée à la masse d'épreuve 61 et en conséquence, aux instruments à étalonner, est donc :
$\Upsilon_x = F_x/m$
m étant la masse de la masse d'épreuve 61.

A titre d'exemple de réalisation on indique que la masse d'épreuve 61 est une bille en alliage platine rhodium de 4 cm de diamètre présentant une masse de 600 g environ. L'espace entre la bille et les électrodes est de 680 µm dans sa position moyenne.

Pour engendrer des accélérations de l'ordre de $10^{-6}$ m/s$^2$ pour étalonner en vol des accéléromètres ultrasensibles, les tensions à appliquer sont relativement faibles compte tenu de la surface d'une électrode égale à 90 mm$^2$ environ, et du gradient de capacité dans l'axe d'une électrode, égale à 1,722 . $10^{-9}$ F/m.

Avec $V_0$ et V = 15 volts, on obtient une accélération :
$\Upsilon = (2\varepsilon S/e^2) (V_0 V/m) \sin \omega t$
$\Upsilon = 2 \times 1,772 . 10^{-9} \times (225/(600.10^{-3})) \sin \omega t$
d'où $\Upsilon = 1,3 . 10^{-6}$ m/s$^2$.

Le dispositif qui vient d'être décrite en référence aux Figs. 8 et 9 fournit des accélérations d'étalonnage en translation sur les trois axes.

Le dispositif conforme à l'invention permet de déterminer à mieux que $10^{-4}$ en valeur relative les différences de sensibilité des accéléromètres à étalonner, à mieux $10^{-4}$ les directions de leurs axes sensibles et de connaître avec une très grande précision leurs positions relatives.

## Revendications

1 - Dispositif d'étalonnage d'instruments de mesure (22) sensibles aux accélérations, dans lequel les instruments sont solidaires d'un support (21) et délivrent des signaux électriques en réponse à des sollicitations d'accélération, et comprenant des moyens pour appliquer des accélérations au support des instruments selon trois axes de référence

$$(\vec{x}, \quad \vec{y}, \quad \vec{z})$$

formant un trièdre rectangle, caractérisé en ce que les moyens pour appliquer des accélérations comprennent trois paires d'actionneurs (1-2, 3-4, 5-6), respectivement associées auxdits trois axes de référence

$$(\vec{x}, \quad \vec{y}, \quad \vec{z})$$

et agencées chacune pour engendrer des accélérations périodiques de translation et de rotation.

2 - Dispositif selon la revendication 1, caractérisé en ce que les actionneurs (1-2, 3-4, 5-6) de chacune desdites paires sont à mouvement rotatif et à balourd dynamique (12) et disposées symétriquement de part et d'autre du point (0) de concours des axes de référence

$$(\overline{x}, \ \overline{y}, \ \overline{z}).$$

3 - Dispositif selon la revendication 2, caractérisé en ce que les actionneurs sont des moteurs électriques (41 à 46) solidaires du support des instruments (21), chaque paire d'actionneurs (1-2, 3-4, 5-6) étant disposée coaxialement à l'axe de référence respectif

$$(\vec{x}, \ \vec{y}, \ \vec{z})$$

et chacun desdits actionneurs comportant une masselotte tournante (12) et un détecteur de phase (13) du mouvement de la masselotte.

4 - Dispositif selon la revendication 3, caractérisé en ce qu'il comprend des moyens (31 à 36) pour commander les moteurs électriques par des tensions périodiques afin que les actionneurs 1-2, 3-4, 5-6) engendrent des accélérations sinsoïdales, et en ce que les signaux électriques délivrés par les instruments à étalonner (22) sont analysés par des moyens de démodulation synchrone.

5 - Dispositif selon la revezndication 1, caractérisé en ce que les actionneurs sont à mouvement linéaire (51-52, 53-54, 55-56) et disposés d'un même côté du point (0) de concours des axes de référence

$$(\vec{x}, \ \vec{y}, \ \vec{z}).$$

6 - Dispositif selon la revendication 5, caractérisé en ce que les actionneurs sont électrodynamiques ou piézoélectriques et interposés entre le support des instruments (21) et un bâti rigide (50), chaque paire d'actionneurs (51-52, 53-54, 55-56) étant disposée symétriquement par rapport à l'axe de référence respectif

$$(\vec{x}, \ \vec{y}, \ \vec{z})$$

et agissant dans un plan contenant l'une respective des faces du trièdre formé par les trois axes de référence

$$(\vec{x}, \ \vec{y}, \ \vec{z})$$

7 - Dispositif selon la revendication 6, caractérisé en ce qu'il comprend des paires de détecteurs de position (23-24, 25-26, 27-28) disposés à proximité des faces du trièdre parallèles à celles relatives aux paires d'actionneurs (51-52, 53-54, 55-56) respectivement, des moyens (35, 36) pour générer des signaux périodiques, et des moyens (29 à 34) d'asservissement de la position du support des instruments (21), recevant des signaux des détecteurs de position et les signaux périodiques pour fournir des signaux électriques de commande aux actionneurs afin qu'ils engendrent des accélérations sinusoïdales, les signaux électriques délivrés par les instruments à étalonner (22) étant analysés par des moyens de démodulation synchrone.

8 - Dispositif selon la revendication 6 dans lequel les actionneurs interposés entre le support (21) des instruments à étalonner et un bâti rigide (50) sont électrodynamiques, caractérisé en ce que, le dispositif étant embraqué à bord d'un satellite à traînée compensée, le support (21) comporte un détecteur de compensation de traînée (60) à masse d'épreuve (61).

9- Dispositif selon la revendication 8 dans lequel les actionneurs (51 à 56) sont commandés pour engendrer des accélérations sinusoïdales de translation et font partie de moyens (30 à 36) pour asservir la position du support (21), caractérisé en ce que les moyens pour asservir reçoivent en entrée des signaux de détection (66) de la position de la masse d'épreuve (61), le mouvement orbital de la masse d'épreuve étant modifié à partir de tensions délivrées par un générateur de tensions (63).

10 - Dispositif selon la revendication 9, caractérisé en ce que la masse d'épreuve (61) du détecteur de compensation de traînée (60) est sphérique, libre et flottante dans une cage (62) portant des électrodes à calotte sphérique ($C_1$-$C_2$, $C_3$-$C_4$, $C_5$-$C_6$ isolées de la cage et alignées par paires selon trois axes orthogonaux

$$(\vec{x}, \ \vec{y}, \ \vec{z})$$

caractérisé en ce que pour chacun des axes, les électrodes constituent à la fois des électrodes d'un détecteur capacitif de position de la masse d'épreuve (61) et des électrodes d'application de forces électrostatiques pour des modifications du mouvement de ladite masse (61).

11 - Procédé d'étalonnage d'instruments (22) sensibles aux accélérations dans lequel les instruments sont solidaires d'un support (21) et délivrent des signaux électriques en répose à des sollicitations d'accélération, consistant à appliquer des accélérations périodiques de translation et de rotation au support (21) selon trois axes de référence

$$(\vec{x}, \ \vec{y}, \ \vec{z})$$

formant un trièdre trirectangle et à recueillir les signaux électriques délivrés par les instruments à étalonner pour en déduire des caractéristiques des instruments, caractérisé en ce que l'on met en oeuvre trois paires d'actionneurs (1-2, 3-4, 5-6 ou 51-52, 53-54, 55-56) pour engendrer des accélérations périodiques de translation et de rotation, chaque paire d'actionneurs étant associée à l'un respectif des axes de référence

$$(\vec{x}, \ \vec{y}, \ \vec{z})$$

et commandée pour engendrer des accélérations périodiques de translation et de rotation.

12 - Procédé selon la revendication 11, caractérisé en ce que la commande des actionneurs engendre des accélérations sinusoïdales à trois fréquences distinctes selon chacun des axes et en ce que les signaux électriques délivrés par les instruments sont analysés au moyen de démodulations synchrones et traités pour déterminer la sensibilité, l'orientation et la position des instruments par rapport aux axes de référence.

13 - Procédé d'étalonnage d'instruments (22) sensibles aux accélérations dans lequel les instruments sont solidaires d'un support (21) embraqué à bord d'un satellite à traînée compensée et délivrent des signaux électriques en réponse à des sollicitations d'accélération, consistant à appliquer des accélérations périodiques de translation au support (21) selon trois axes de référence

$$(\vec{x}, \quad \vec{y}, \quad \vec{z})$$

formant un trièdre trirectangle et à recueillir les signaux électriques délivrés par les instruments à étalonner pour en déduire des caractéristiques des instruments, dnas lequel on met en oeuvre trois paires d'actionneurs électrodynamiques (51-52, 53-54, 55-56) pour engendrer des accélérations périodiques de translation, chaque paire étant associée à l'un respectif des axes de référence et incluse dans une boucle d'asservissement de la position du support (21) par rapport à une masse d'épreuve (61), caractérisé en ce qu'il consiste à mettre en oeuvre un détecteur de compensation de traînée (60) de type capacitif, incluant ladite masse d'épreuve (61), à appliquer deux tensions de détection en opposition de phase ($-V_D \sin \omega_D t$, $+V_D \sin \omega_D t$) aux deux électrodes de chacune desdites paires d'électrodes ($C_1$-$C_2$, $C_3$-$C_4$, $C_5$-$C_6$) respectivement et, pendant des phases d'étalonnage des instruments, à appliquer des tensions de génération des accélérations d'étalonnage ($-V_0 + V \sin \omega t$, $V_0 + V \sin \omega t$) aux électrodes ($C_1$, $C_2$) de l'un

$$(\vec{x})$$

des axes à étalonner et d'autres tensions ($-V/2 \sin \omega t$) aux électrodes des deux autres axes, lesdites autres tensions ayant de préférence des amplitudes moitiés et des phases opposées à celles desdites tensions de génération des accélérations d'étalonnage, et en ce que les signaux électriques délivrés par les instruments de mesure à étalonner sont analysés par démodulations synchrones et traités pour déterminer la sensibilité, l'orientation et la position des instruments par rapport aux axes de référence.

**Patentansprüche**

1. Eichvorrichtung für beschleunigungsempfindliche Meßgeräte (22), in der die Geräte fest mit einer Tragauflage (21) verbunden sind und ansprechend auf Beschleunigungsbeanspruchungen elektrische Signale abgeben und Mittel zum Aufbringen der Beschleunigungen auf die Tragauflage der Geräte gemäß drei ein rechtwinkliges Trieder bildenden Bezugsachsen

$$(\vec{x}, \quad \vec{y}, \quad \vec{z})$$

aufweisen, dadurch gekennzeichnet, daß die Mittel zum Aufbringen der Beschleunigungen drei Paare von Betätigungsgeräten (1-2, 3-4, 5-6) aufweisen, die jeweils den drei Bezugsachsen

$$(\vec{x}, \quad \vec{y}, \quad \vec{z})$$

zugeordnet sind und jeweils eingerichtet sind, um periodische Translations- und Rotationsbeschleunigungen zu erzeugen.

2. Vorrichtung nach Anspruch 1, dadurch gekennzeichnet, daß die Betätigungsgeräte (1-2, 3-4, 5-6) jedes der Paare mit Drehbewegung und dynamischer Unwucht (12) und auf beiden Seiten des Zusammentreffpunkts (0) der Bezugsachsen

$$(\vec{x}, \quad \vec{y}, \quad \vec{z})$$

symmetrisch angeordnet sind.

3. Vorrichtung nach Anspruch 2, dadurch gekennzeichnet, daß die Betätigungsgeräte fest mit der Tragauflage der Geräte (21) verbundene Elektromotoren (41 bis 46) sind, wobei jedes Betätigungsgerätepaar (1-2, 3-4, 5-6) koaxial zur entsprechenden Bezugsachse

$$(\vec{x}, \quad \vec{y}, \quad \vec{z})$$

angeordnet ist und jedes der Betätigungsgeräte ein sich drehendes Fliehgewicht (12) und einen Phasendetektor (13) für die Bewegung des Fliehgewichts umfaßt.

4. Vorrichtung nach Anspruch 3, dadurch gekennzeichnet, daß sie Mittel (31 bis 36) zur Betätigung der Elektromotoren durch periodische Spannungen aufweist, damit die Betätigungsgeräte (1-2, 3-4, 5-6) sinusförmige Beschleunigungen erzeugen, und daß die von den zu eichenden Geräten (22) abgegebenen elektrischen Signale durch Mittel zur synchronen Demodulation analysiert werden.

5. Vorrichtung nach Anspruch 1, dadurch gekennzeichnet, daß die Betätigungsgeräte mit Linearbewegung (51-52, 53-54, 55-56) und auf einer gleichen Seite des Zusammentreffpunkts (0) der Bezugsachsen

$$(\vec{x}, \quad \vec{y}, \quad \vec{z})$$

angeordnet sind.

6. Vorrichtung nach Anspruch 5, dadurch gekennzeichnet, daß die Betätigungsgeräte elektrodynamisch oder piezoelektrisch und zwischen der Tragauflage der Geräte (21) und einem starren Gestell (50) angeordnet sind, wobei jedes Betätigungsgerätepaar (51-52, 53-54, 55-56) symmetrisch in bezug auf die entsprechende Bezugsachse

$$(\vec{x}, \quad \vec{y}, \quad \vec{z})$$

angeordnet und in einer Ebene wirkt, die die eine entsprechende der Seiten des durch die drei Bezugsachsen

$$(\vec{x}, \quad \vec{y}, \quad \vec{z})$$

gebildeten Trieders enthält.

7. Vorrichtung nach Anspruch 6, dadurch gekennzeichnet, daß sie Paare von Positionsdetektoren (23-24, 25-26, 27-28), die in der Nähe der Seiten des Trieders jeweils parallel zu den auf die Betätigungsgerätepaare (51-52, 53-54, 55-56) bezogen, angeordnet sind, Mittel (35, 36) zur Erzeugung der periodischen Signale und Mittel (29 bis 34) zur Steuerung der Position der Stützauflage der Geräte (21) aufweist, die Signale der Positionsdetektoren und die periodischen Signale aufnehmen, um elektrische Befehlssignale zu den Betätigungsgeräten zu liefern, damit diese sinusförmige Beschleunigungen erzeugen, wobei die von den zu eichenden Geräten (22) abgegebenen elektrischen Signale durch die Mittel zur synchronen Demodulation analysiert werden.

8. Vorrichtung nach Anspruch 6, in der die zwischen der Tragauflage (21) der zu eichenden Geräte und einem starren Gestell (50) angeordneten Betätigungsgeräte elektrodynamisch sind, dadurch gekennzeichnet, daß bei an Bord eines Satelliten mit kompensiertem Widerstand eingeladener Vorrichtung die Tragauflage (21) einen Detektor zur Widerstandskompensation (60) mit Prüfmasse (61) umfaßt.

9. Vorrichtung nach Anspruch 8, in der die Betätigungsgeräte (51 bis 56) befehlsgesteuert sind, um sinusförmige Translationsbeschleunigungen zu erzeugen, und einen Teil von Mitteln (30 bis 36) bilden, um die Position der Tragauflage (21) zu steuern, dadurch gekennzeichnet, daß die Mittel zum Steuern Eingangssignale zur Detektion (66) der Position der Prüfmasse (61) aufnehmen, wobei die Orbitalbewegung der Prüfmasse ausgehend von Spannungen modifiziert wird, die von einem Spannungsgenerator (63) ausgegeben werden.

10. Vorrichtung nach Anspruch 9, dadurch gekennzeichnet, daß die Prüfmasse (61) des Detektors zur Widerstandskompensation (60) sphärisch, frei und in einem Käfig (62) schwebend ist, die Elektroden mit sphärischer Kappe ($C_1$-$C_2$, $C_3$-$C_4$, $C_5$-$C_6$) trägt, die von dem Käfig isoliert und paarweise gemäß den orthogonalen Achsen

$$(\vec{x}, \quad \vec{y}, \quad \vec{z})$$

ausgerichtet sind, dadurch gekennzeichnet, daß die Elektroden für jede der Achsen zugleich Elektroden eines kapazitiven Positionsdetektors für die Prüfmasse (61) und Elektroden zum Aufbringen von elektrostatischen Kräften für Modifikationen der Bewegung der Masse (61) bilden.

11. Eichverfahren für beschleunigungsempfindliche Geräte (22), bei dem die Geräte fest mit einer Tragauflage (21) verbunden sind und elektrische Signale ansprechend auf Beschleunigungsbeanspruchungen abgeben, bestehend darin, daß periodische Translations- und Rotationsbeschleunigungen auf die Tragauflage (21) gemäß drei ein 3-rechtwinkliges Trieder bildenden Bezugsachsen

$$(\vec{x}, \quad \vec{y}, \quad \vec{z})$$

aufgebracht werden und von den zu eichenden Geräten abgegebene elektrische Signale aufgenommen werden, um daraus Eigenschaften der Geräte abzuleiten, dadurch gekennzeichnet, daß drei Betätigungsgerätepaare (1-2, 3-4, 5-6 oder 51-52, 53-54, 55-56) verwendet werden, um periodische Translations- und Rotationsbeschleunigungen zu erzeugen, wobei jedes Betätigungsgerätepaar einer entsprechenden der Bezugsachsen

$$(\vec{x}, \quad \vec{y}, \quad \vec{z})$$

zugeordnet und befehlsgesteuert ist, um periodische Translations- und Rotationsbeschleunigungen zu erzeugen.

12. Verfahren nach Anspruch 11, dadurch gekennzeichnet, daß der Befehl der Betätigungsgeräte sinusförmige Beschleunigungen mit drei verschiedenen Frequenzen gemäß jeder der Achsen erzeugt und daß die von den Geräten abgegebenen elektrischen Signale mittels synchroner Demodulationen analysiert werden und verarbeitet werden, um die Empfindlichkeit, die Orientierung und die Position der Geräte in bezug auf die Bezugsachsen zu bestimmen.

13. Eichverfahren für beschleunigungsempfindliche Geräte (22), bei dem die Geräte fest mit einer Tragauflage (21) verbunden sind, die an Bord eines Satelliten mit kompensiertem Widerstand eingeladen ist, und elektrische Signale ansprechend auf Beschleunigungsbeanspruchungen abgeben, bestehend darin, daß periodische Translationsbeschleunigungen auf die Tragauflage (21) gemäß drei ein 3-rechtwinkliges Trieder bildenden Bezugsachsen

$$(\vec{x}, \quad \vec{y}, \quad \vec{z})$$

gegeben werden und die von den zu eichenden Geräten abgegebenen elektrischen Signale aufgenommen werden, um hieraus Merkmale der Geräte abzuleiten, wobei drei Paare von elektrodynamischen Betätigungsgeräten (51-52, 53-54, 55-56) verwendet werden, um periodische Translationsbeschleunigungen zu erzeugen, wobei jedes Paar einer entsprechenden der Bezugsachsen zugeordnet ist und in einer Steuerschleife für die Position der Tragauflage (21) in bezug auf eine Prüfmasse (61) enthalten ist, dadurch gekennzeichnet, daß es daraus besteht, einen Detektor zur Widerstandskompensation (60) vom kapazitiven Typ, enthaltend die Prüfmasse (61), zu verwenden, um zwei gegenphasige Detektionsspannungen ($-V_D \sin \omega_D t$, $+V_D \sin \omega_D t$) jeweils an die beiden Elektroden jedes der Elektrodenpaare ($C_1$-$C_2$, $C_3$-$C_4$, $C_5$-$C_6$) anzulegen und während Eichphasen der Geräte Spannungen zur

Erzeugung der Eichbeschleunigungen ($-V_0 + V \sin \omega t$, $V_0 + V \sin \omega t$) an die Elektroden ($C_1$-$C_2$) der einen

$$\vec{x}$$

der zu eichenden Achsen und andere Spannungen ($-V/2 \sin \omega t$) an die Elektroden der beiden anderen Achsen anzulegen, wobei die anderen Spannungen vorzugsweise halbierte Amplituden und Phasen entgegengesetzt zu denjenigen der Spannungen zur Erzeugung der Eichbeschleunigungen aufweisen, und daß die von den zu eichenden Meßgeräten abgegebenen elektrischen Signale durch synchrone Demodulationen analysiert und verarbeitet werden, um die Empfindlichkeit, die Orientierung und die Position der Geräte in bezug auf die Bezugsachsen zu bestimmen.

## Claims

1. Device for calibrating acceleration-sensitive measuring instruments (22), in which the instruments are attached to a support (21) and deliver electric signals in response to acceleration actions, and comprising means for applying accelerations to the instrument support along three reference axes

$$(\vec{x}, \quad \vec{y}, \quad \vec{z})$$

forming a trirectangular trihedral, characterized in that the acceleration applying means comprise three pairs of actuators (1-2, 3-4, 5-6) respectively associated with the three reference axes

$$(\vec{x}, \quad \vec{y}, \quad \vec{z})$$

and each laid out to induce periodic translational and rotational accelerations.

2. Device according to claim 1, characterized in that the actuators (1-2, 3-4, 5-6) of each of said pairs are with rotative motion and dynamic unbalanced weight (12) and laid out symmetrically on either side of the point (0) where the reference axes

$$(\vec{x}, \quad \vec{y}, \quad \vec{z})$$

intersect.

3. Device according to claim 2, characterized in that the actuators are electric motors (41 to 46) attached to the instrument support (21), each actuator pair (1-2, 3-4, 5-6) being laid out coaxially with the respective reference axis

$$(\vec{x}, \quad \vec{y}, \quad \vec{z})$$

and each of said actuators comprising a rotative weight (12) and a phase detector (13) for the rotation of the weight.

4. Device according to claim 3, characterized in that it comprises means (31 to 36) for controlling the electric motors by periodic voltages whereby the actuators (1-2, 3-4, 5-6) induce sinusoidal accelerations, and in that the electrical signals delivered from the instruments to be calibrated (22) are analyzed by synchronous demodulating means.

5. Device according to claim 1, characterized in that the actuators are with linear motion (51-52, 53-54, 55-56) and laid out on the same side of the point (0) where the reference axes

$$(\vec{x}, \quad \vec{y}, \quad \vec{z})$$

intersect.

6. Device according to claim 5, characterized in that the actuators are electrodynamic or piezoelectric and placed between the instrument support (21) and a rigid frame (50), each actuator pair (51-52, 53-54, 55-56) being symmetrically laid out in relation to the respective reference axis

$$(\vec{x}, \quad \vec{y}, \quad \vec{z})$$

and acting in a plane containing the respective one of faces of the trihedral formed by the three reference axis

$$(\vec{x}, \quad \vec{y}, \quad \vec{z})$$

7. Device according to claim 6, characterized in that it comprises pairs of position detectors (23-24, 25-26, 26-28) close to faces of the trihedral parallel to those relating to the actuators pairs (51-52, 53-54, 55-56) respectively, means (35, 36) for generating periodic signals, and instrument support (21) position slaving means (29 to 34) receiving signals from the position detectors and the periodic signals for supplying electric control signals to the actuators whereby they induce sinusoidal accelerations, the electric signals delivered by the instruments to be calibrated (22) being analyzed by synchronous demodulating means.

8. Device according to claim 6 wherein the actuators placed between the support (21) of the instruments to be calibrated and a rigid frame (50) are electrodynamic, characterized in that, the device being carried on-board a compensated-drag satellite, the support (21) comprises a drag compensation detector (60) with a test weight (61).

9. Device according to claim 10 wherein the actuators (51 to 56) are controlled to induce sinusoidal translational accelerations and are included in means (30 to 36) for slaving the position of the support (21), characterized in that the slaving means receive on input test weight (61) position detection signals (66), the orbital displacement of the test weight being changed from voltages delivered by a voltage generator (63).

10. Device according to claim 9, characterized in that the test weight (61) in the drag compensation detector (60) is spherical, free and floating in a cage (62) carrying spherical cap electrode ($C_1$-$C_2$, $C_3$-$C_4$, $C_5$-$C_6$) isolated from the cage and aligned in pairs along three orthogonal axes

$$(\vec{x}, \quad \vec{y}, \quad \vec{z})$$

characterized in that for each of the axes, the electrodes constitute both electrodes of a test weight (61) position capacitive detector and electrostatic force application electrodes for changes of displacement of the weight (61).

11. Calibration method for instruments (22) sensitive to accelerations in which the instruments are attached to a support (21) and deliver electric signals in response to acceleration actions, consisting in applying periodic translational and rotational accelerations to the support (21) along three reference axes

$$(\vec{x}, \quad \vec{y}, \quad \vec{z})$$

forming a trirectangular trihedral and in collecting the electric signals delivered from the instruments to be calibrated thereby deducing the characteristics of the instruments, characterized in that three pairs of actuators (1-2, 3-4, 5-6 or 51-52, 53-54, 55-56) for inducing periodic translational and rotational accelerations are used, each pair of actuators being associated with the respective one of the three reference axes

$$(\vec{x}, \quad \vec{y}, \quad \vec{z})$$

and controlled to induce periodic translational and rotational accelerations.

12. Method according to claim 13, characterized in that the control of the actuators induces sinusoidal accelerations with three distinct frequencies for each of the axes and in that the electric signals delivered from the instruments are analyzed by synchronous demodulation means and processed to determine sensitivity, orientation and position of the instruments in relation to the reference axes.

13. Calibration Method for instruments (22) sensitive to accelerations in which the instruments are attached to a support (21) carried on-board a compensated-drag satellite and deliver electric signals responsive to acceleration actions, consisting in applying periodic translational accelerations to the support (21) along three reference axes

$$(\vec{x}, \quad \vec{y}, \quad \vec{z})$$

forming a trirectangular trihedral and in collecting the electric signals delivered from the instruments to be calibrated thereby deducing characteristics of the instruments, wherein three pairs of electrodynamic actuators (51-52, 53-54, 55-56) for deducing periodic translational accelerations are used, each pair being associated with the respective one of the reference axes and included in a loop for position-slaving the support (21) in relation to a test weight (61), characterized in that it consists in using a drag compensation detector (60) of capacitive type including said test weight (61), in applying two oppositely phased detection voltages ($-V_D \sin \omega_D t$,

$+V_D \sin \omega_D t$) to the two electrodes of each of said electrode pairs $C_1-C_2, C_3-C_4, C_5-C_6$) respectively and, throughout instrument calibration acceleration generation voltages ($-V_O V \sin \omega t$, $V_O + V \sin \omega t$)

$$(\vec{x})$$

of the axes to be calibrated and other voltages ($-V/2 \sin \omega t$) to the electrodes of the other two axes, said other voltages preferably having half amplitudes and opposite phases to those of said calibration acceleration generation voltages, and in that the electric signals delivered from the measuring instruments to be calibrated are analyzed by synchronous demodulations and processed to determine sensitivity, orientation and position of the instruments in relation to the reference axes.

FIG_1

FIG_2

HORLOGE — 14

UNITE DE COMMANDE DE PHASE — 20

ASSERVISSEMENT

15

16

COMPARATEUR DE $\phi$

17

18

ASSERVISSEMENT

19

DETECTEUR DE PHASE

$13_3$

$0$ DETECTEUR DE PHASE

$13_4$

$\vec{y}$

ACTIONNEUR 3

MOTEUR $7_3$

MOTEUR $7_4$

ACTIONNEUR 4

## FIG.3

$\vec{z}$

22

$A_8$

22

$A_7$

21

46

$\omega_z$

22

$A_5$

41

43

22

$A_6$

$\vec{y}$

0

$\omega_y$

44

$\omega_x$

$A_4$

22

$A_3$

42

$\vec{x}$

22

45

22

22

## FIG.4

FIG_5

ACTIONNEUR 54

DETECTEUR DE POSITION

SUPPORT CUBIQUE 21

AMPLIFICATEUR

GENERATEUR

GENERATEUR

COMMANDE TRANSLATION

COMMANDE ROTATION

AMPLIFICATEUR

FIG_6

FIG_7

$$-\frac{V}{2}\sin\omega t + V_D \sin\omega_D t$$

$$-V_D \sin\omega_D t + (-V_0 + V\sin\omega t)$$

$$V_0 + V\sin\omega t + V_D \sin\omega_D t$$

$$-\frac{V}{2}\sin\omega t - V_D \sin\omega_D t$$

MASSE D'EPREUVE

GENERATEUR DE TENSIONS

ADAPTATEUR

ADAPTATEUR

DETECTEUR DE POSITION

VERS 31 (FIG. 9)

FIG_8

## FIG. 9